# EUROPEAN PATENT APPLICATION

(11) **EP 4 625 864 A1**
(43) Date of publication of application: **01.10.2025**
(21) Application number: 22966101.2
(22) Date of filing: 22.11.2022
(51) Int. Cl.: H04L 5/00, H04W 8/24

(54) **CAPABILITY INFORMATION TRANSMISSION METHOD AND APPARATUS, AND READABLE STORAGE MEDIUM**

(71) Applicant: Beijing Xiaomi Mobile Software Co., Ltd., Beijing 100085 (CN)
(72) Inventor: GUO, Shengxiang, Beijing 100085 (CN)
(74) Representative: Dehns Germany Partnerschaft mbB
(86) International application number: PCT/CN2022/133570
(87) International publication number: WO 2024/108402

(57) **Abstract**

The present disclosure provides a capability information transmission method and apparatus, and a readable storage medium. The method comprises: sending capability information to a network device, wherein the capability information is used to indicate maximum sensitivity degradation (MSD) information supported by user equipment in multi-carrier transmission. According to the method of the present disclosure, user equipment reports capability information to a network device, so as to report MSD information supported by the user equipment itself. In this way, the network device can obtain MSD information compatible with the capability of the user equipment, so that the network device can easily perform appropriate scheduling on the basis of the capability of the user equipment.

## Description

### TECHNICAL FIELD

The present disclosure relates to the field of wireless communication technologies, and in particular to a method, apparatus and readable storage medium for capability information transmission.

### BACKGROUND

In wireless communication systems, such as 4G or 5G communication systems, in order to improve the transmission rate and system capacity, multi-carrier technology, such as carrier aggregation (CA), can be used. When implementing multi-carrier transmission in some frequency band combinations, there will be potential self-interference problems. When the frequency is determined, the magnitude of self-interference is usually related to the uplink transmission power. The greater the transmission power, the greater the self-interference, and thus the greater the sensitivity loss of the downlink.

To ensure the performance of carrier aggregation, it is usually stipulated that the sensitivity loss in the worst case does not exceed the set value. For example, 3GPP defines the minimum required value of maximum sensitivity degradation (MSD) under different frequency band combinations. Different terminals perform multi-carrier transmission according to the MSD minimum required value defined in the protocol.

### SUMMARY

The present disclosure provides a method, an apparatus, and a readable storage medium for sending capability information.

In a first aspect, the present disclosure provides a method for capability information transmission, which is performed by a user equipment, and the method includes:

sending capability information to a network device, where the capability information is used to indicate maximum sensitivity impairment (MSD) information supported by the user equipment in multi-carrier transmission.

In the disclosed method, the user equipment reports the MSD information it supports by reporting capability information to the network device, so that the network device can obtain the MSD information adapted to the capabilities of the user equipment, so that the network device can perform more reasonable scheduling based on the capabilities of the user equipment.

In some possible implementations, the sending capability information to the network device includes:
receiving first indication information sent by the network device, wherein the first indication information includes an interfered frequency band and/or a self-interference type; and
sending the capability information corresponding to the interfered frequency band and/or the capability information corresponding to the self-interference type to the network device.

In some possible implementations, the sending capability information to the network device includes:
receiving second indication information sent by the network device, wherein the second indication information is used to indicate an MSD threshold; and
sending the corresponding capability information to the network device when the MSD information is lower than the corresponding MSD threshold.

In some possible implementations, the second indication information is further used to indicate the interfered frequency band and/or the self-interference type corresponding to the MSD threshold.

In some possible implementations, the capability information includes a plurality of pieces of MSD information corresponding to different interfered frequency bands.

In some possible implementations, the capability information includes a plurality of pieces of MSD information corresponding to different self-interference types.

In some possible implementations, the MSD information includes whether a first MSD capability is supported.

In some possible implementations, the MSD information includes at least one of:
an MSD value supported by the user equipment; or
an MSD value range supported by the user equipment.

In some possible implementations, the capability information includes a first information field for indicating the MSD information.

In some possible implementations, the capability information is further used to indicate at least one of:
an interfered frequency band corresponding to the MSD information;
a self-interference type corresponding to the MSD information; or
a power class corresponding to the MSD information.

In some possible implementations, the capability information includes at least one of:
a second information field for indicating the interfered frequency band;
a third information field for indicating the self-interference type; or
a fourth information field is used to indicate the power class.

In a second aspect, the present disclosure provides a method for receiving capability information, performed by a network device, the method including:
receiving capability information sent by a user equipment, wherein the capability information is used to indicate maximum sensitivity impairment (MSD) information supported by the user equipment in multi-carrier transmission.

In the disclosed method, the network device obtains the MSD information supported by the user equipment according to the capability information reported by the user equipment, so that the network device can perform more reasonable scheduling based on the capability of the user equipment.

In some possible implementations, the receiving capability information sent by the user equipment includes:
sending first indication information to the user equipment, wherein the first indication information includes an interfered frequency band and/or a self-interference type; and
receiving the capability information corresponding to the interfered frequency band and/or the capability information corresponding to the self-interference type sent by the user equipment.

In some possible implementations, the receiving capability information sent by the user equipment includes:
sending second indication information to the user equipment, wherein the second indication information is used to indicate an MSD threshold; and
receiving the capability information sent by the user equipment, wherein the MSD information in the capability information is lower than the MSD threshold.

In some possible implementations, the second indication information is further used to indicate the interfered frequency band and/or the self-interference type corresponding to the MSD threshold.

In some possible implementations, the method further includes:
performing scheduling according to the capability information.

In a third aspect, the present disclosure provides an apparatus for sending capability information, which may be used to execute the steps performed by the user equipment in the first aspect or any possible design of the first aspect. The user equipment may implement the functions of the above methods in the form of a hardware structure, a software module, or a hardware structure plus a software module.

When the apparatus shown in the third aspect is implemented by a software module, the apparatus may include a transceiver module and a processing module coupled to each other, wherein the transceiver module can be used to support a communication device to communicate.

When executing the steps described in the first aspect above, the transceiver module is configured to send capability information to a network device, wherein the capability information is used to indicate maximum sensitivity impairment (MSD) information supported by the user equipment in multi-carrier transmission.

In a fourth aspect, the present disclosure provides an apparatus for receiving capability information, which can be used to execute the steps performed by the network device in the second aspect or any possible design of the second aspect. The network device can implement each function in the above methods in the form of a hardware structure, a software module, or a hardware structure plus a software module.

When the apparatus shown in the fourth aspect is implemented by a software module, the apparatus may include a transceiver module, and the transceiver module can be used to support a communication device to communicate.

When executing the steps described in the second aspect above, the transceiver module is configured to receive capability information sent by a user equipment, wherein the capability information is used to indicate maximum sensitivity impairment (MSD) information supported by the user equipment in multi-carrier transmission.

In a fifth aspect, the present disclosure provides a communication device, including a processor and a memory; the memory is used to store a computer program; the processor is used to execute the computer program to implement the first aspect or any possible design of the first aspect.

In a sixth aspect, the present disclosure provides a communication device, including a processor and a memory; the memory is used to store a computer program; the processor is used to execute the computer program to implement the second aspect or any possible design of the second aspect.

In the seventh aspect, the present disclosure provides a computer-readable storage medium, which stores instructions (or referred to a computer program, or a program), which, when called and executed on a computer, enable the computer to execute the above-mentioned first aspect or any possible design of the first aspect.

In an eighth aspect, the present disclosure provides a computer-readable storage medium, in which stores instructions (or referred to a computer program, or a program) which, when called and executed on a computer, enable the computer to execute the above-mentioned second aspect or any possible design of the second aspect.

It is to be understood that both the foregoing general description and the following detailed description are exemplary and explanatory only and are not restrictive of the present disclosure.

### BRIEF DESCRIPTION OF THE DRAWINGS

The drawings described herein are used to provide a further understanding of the embodiments of the present disclosure and constitute a part of this application. The illustrative embodiments of the embodiments of the present disclosure and their descriptions are used to explain the embodiments of the present disclosure and do not constitute an improper limitation on the embodiments of the present disclosure. In the drawings:

The accompanying drawings herein are incorporated in and constitute a part of the specification, illustrate embodiments consistent with the embodiments of the present disclosure, and together with the description, serve to explain the principles of the embodiments of the present disclosure.
FIG. 1 is a schematic diagram of a wireless communication system architecture provided by an embodiment of the present disclosure;
FIG. 2 is a flow chart showing a method for capability information transmission according to an exemplary embodiment;
FIG. 3 is a flow chart showing a method for sending capability information according to an exemplary embodiment;
FIG. 4 is a flow chart showing another method for sending capability information according to an exemplary embodiment;
FIG. 5 is a flow chart showing another method for sending capability information according to an exemplary embodiment;
FIG. 6 is a schematic diagram showing the structure of capability information according to an exemplary embodiment;
FIG. 7 is a schematic diagram showing the structure of capability information according to another exemplary embodiment;
FIG. 8 is a schematic diagram showing the structure of capability information according to another exemplary embodiment;
FIG. 9 is a schematic diagram showing the structure of capability information according to another exemplary embodiment;
FIG. 10 is a flow chart showing a method for receiving capability information according to an exemplary embodiment;
FIG. 11 is a block diagram showing an apparatus for sending capability information according to an exemplary embodiment;
FIG. 12 is a block diagram of a user equipment according to an exemplary embodiment;
FIG. 13 is a block diagram of an apparatus for receiving capability information according to an exemplary embodiment; and
FIG. 14 is a block diagram of a communication device according to an exemplary embodiment.

### DETAILED DESCRIPTION

The embodiments of the present disclosure are now further described in conjunction with the accompanying drawings and specific implementations.

Exemplary embodiments will be described in detail herein, examples of which are shown in the accompanying drawings. When the following description refers to the drawings, the same numbers in different drawings represent the same or similar elements unless otherwise indicated. The implementations described in the following exemplary embodiments do not represent all implementations consistent with the embodiments of the present disclosure. Instead, they are merely examples of devices and methods consistent with some aspects of the present disclosure as detailed in the appended claims.

The terms used in the disclosed embodiments are only for the purpose of describing specific embodiments and are not intended to limit the disclosed embodiments. The singular forms of "a" and "the" used in the disclosed embodiments and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the disclosed embodiments, the information should not be limited to these terms. These terms are only used to distinguish the same type of information from each other. For example, without departing from the scope of the disclosed embodiments, the first information may also be referred to as the second information, and similarly, the second information may also be referred to as the first information. Depending on the context, the words "if" and "in case" as used herein may be interpreted as "at" or "when" or "in response to determination".

The embodiments of the present disclosure are described in detail below, and examples of the embodiments are shown in the accompanying drawings, wherein the same or similar reference numerals throughout represent the same or similar elements. The embodiments described below with reference to the accompanying drawings are exemplary and are intended to be used to explain the present disclosure, and cannot be understood as limiting the present disclosure.

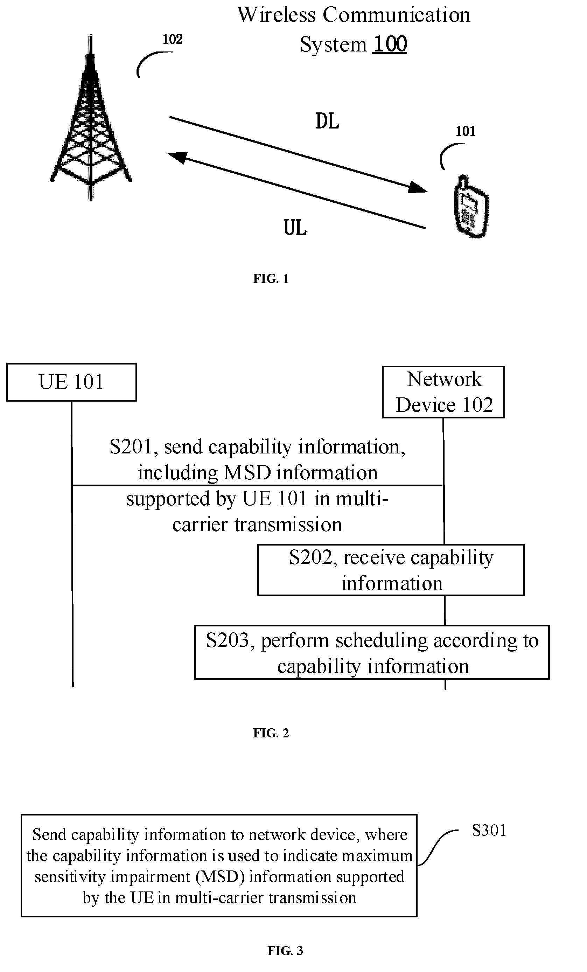

As shown in FIG. 1, the method for capability information transmission provided by an embodiment of the present disclosure may be applied to a wireless communication system 100, which may include a user equipment 101 and a network device 102. The user equipment 101 is configured to support carrier aggregation and may be connected to multiple carrier components of the network device 102, including a primary carrier component and one or more secondary carrier components.

It should be understood that the above wireless communication system 100 can be applied to both low-frequency scenarios and high-frequency scenarios. Application scenarios of the wireless communication system 100 include, but are not limited to, long term evolution (LTE) systems, LTE frequency division duplex (FDD) systems, LTE time division duplex (TDD) systems, worldwide interoperability for micro wave access (WiMAX) communication systems, cloud radio access network (CRAN) systems, future fifth-generation (5G) systems, new radio (NR) communication systems, or future evolved public land mobile network (PLMN) systems.

The user equipment 101 illustrated above may be a terminal, an access terminal, a terminal unit, a terminal station, a mobile station (MS), a remote station, a remote terminal, a mobile terminal, a wireless communication device, a terminal agent or a terminal device, etc. The user equipment 101 may have a wireless transceiver function, and it may communicate (such as wireless communication) with one or more network devices of one or more communication systems, and receive network services provided by the network devices, where the network devices include but are not limited to the network device 102 shown in the figure.

In the disclosure, the user equipment 101 can be a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, a vehicle-mounted device, a wearable device, a terminal device in a future 5G network, or a terminal device in a future evolved PLMN network, etc.

The network device 102 may be an access network device (or access network point). In the disclosure, the access network device refers to a device that provides network access functions, such as a radio access network (RAN) base station, etc. The network device 102 may specifically include a base station (BS), or a base station and a wireless resource management device for controlling the base station, etc. The network device 102 may also include a relay station (relay device), an access point, a base station in a future 5G network, a base station in a future evolved PLMN network, or an NR base station, etc. The network device 102 may be a wearable device or a vehicle-mounted device. The network device 102 may also be a communication chip with a communication module.

For example, the network device 102 includes but is not limited to: the next generation base station (gnodeB, gNB) in 5G, the evolved node B (eNB) in the LTE system, the radio network controller (RNC), the node B (NB) in the WCDMA system, the wireless controller under the CRAN system, the base station controller (BSC), the base transceiver station (BTS) in the GSM system or the CDMA system, the home base station (for example, home evolved nodeB, or home node B, HNB), the baseband unit (BBU), the transmission point (transmitting and receiving point, TRP), the transmitting point (TP) or the mobile switching center, etc.

The relevant protocols define the minimum requirements for the MSD value under different frequency band combinations, but for some high-performance user equipment 101, which has a stronger self-interference suppression capability, such user equipment 101 can support a smaller MSD. However, in the relevant protocols, the network device 102 cannot distinguish between user equipment 101 with different capabilities, which will affect the rationality of scheduling or configuration.

For example, the MSD value defined by the protocol is too large for some frequency band combinations, and the network device 102 corresponding to the operator does not consider configuring the multi-carrier mode for the UE on this part of the frequency band combination when deploying the network. This will cause the high-performance user equipment 101 to be unable to operate in the multi-carrier mode, thereby reducing the system performance and spectrum utilization.

For another example, the network device 102 deploys the multi-carrier mode without distinguishing the capabilities of the user equipment 101, wherein some user equipment 101 with poor self-interference suppression capabilities are also configured in the multi-carrier mode. However, due to the poor capabilities of these user equipments 101, the self-interference problem will cause a large loss of downlink sensitivity, thereby affecting the downlink performance.

Therefore, in the related art, the network device 102 cannot configure a multi-carrier mode for the user equipment 101 according to the self-interference suppression capability of the user equipment 101, which may cause problems such as reduced system performance and spectrum utilization, or affect downlink performance.

The present disclosure provides a method for capability information transmission. Referring to FIG. 2, FIG. 2 is a method for capability information transmission according to an exemplary embodiment. As shown in FIG. 2, the method includes steps S201 to S202, specifically:
Step S201: User equipment 101 sends capability information to a network device, where the capability information is used to indicate maximum sensitivity impairment (MSD) information supported by the user equipment 101 in multi-carrier transmission.
Step S202: Network device 102 receives the capability information.

In some possible implementations, multi-carrier transmission is wireless transmission based on multi-carrier technology, wherein the multi-carrier technology includes carrier aggregation (CA) and dual connectivity (DC) technology, such as evolved universal terrestrial radio access network new radio dual connectivity (E-UTRAN New Radio Dual Connectivity, EN-DC).

In some possible implementations, the MSD information supported by the user equipment 101 includes whether the first MSD capability is supported. The first MSD capability is used to indicate that the MSD information supported by the user equipment 101 is lower than a value agreed upon in the protocol.

In some possible implementations, the MSD information supported by the user equipment 101 includes an MSD value or an MSD value range.

In some possible implementations, the smaller the MSD value supported by the user equipment 101, the stronger the self-interference suppression capability is.

In one example, the MSD value supported by the user equipment 101 with strong self-interference suppression capability may be 10 dB smaller than the MSD value defined in the relevant protocol.

In some possible implementations, the user equipment 101 with strong self-interference suppression capability may have a larger uplink transmission power and a smaller downlink sensitivity loss. Therefore, the network device 102 may perform adaptive scheduling based on the capability of the user equipment 101.

In some possible implementations, the method may further include step S203, specifically:
Step S203: Network device 102 performs scheduling according to the capability information.

In this implementation, the network device 102 can configure a multi-carrier mode for the user equipment 101 with strong self-interference suppression capability, which can not only improve the transmission rate and system capacity, but also effectively reduce the impact of the self-interference problem and reduce sensitivity loss.

In this implementation, for the user equipment 101 configured in multi-carrier mode and having a strong self-interference suppression capability, a larger uplink transmission power can still be allowed, thereby improving system performance.

In the disclosed embodiment, the user equipment 101 reports the MSD information supported by itself by reporting the capability information to the network device 102, so that the network device 102 can obtain MSD information adapted to the capability of the user equipment 101, so that the network device 102 can perform more reasonable scheduling based on the capability of the user equipment 101.

The present disclosure provides a method for sending capability information, the method is executed by a user equipment 101. Referring to FIG. 3, FIG. 3 is a method for sending capability information according to an exemplary embodiment. As shown in FIG. 3, the method includes step S301, specifically:
Step S301: User equipment 101 sends capability information to a network device 102, where the capability information is used to indicate maximum sensitivity impairment (MSD) information supported by the user equipment 101 in multi-carrier transmission.

In some possible implementations, the multi-carrier transmission may be the transmission based on carrier aggregation technology, or transmission based on dual connectivity technology.

In some possible implementations, the MSD information supported by the user equipment 101 includes whether the first MSD capability is supported. The first MSD capability is used to indicate that the MSD information supported by the user equipment 101 is lower than a value agreed upon in the protocol.

In some possible implementations, the MSD information supported by the user equipment 101 includes an MSD value or an MSD value range.

In some possible implementations, the MSD information is indicated by the first information field of the capability information.

In some possible implementations, the smaller the MSD value supported by the user equipment 101, the stronger the self-interference suppression capability is.

In some possible implementations, the MSD information reported by the user equipment 101 may be applicable to all supported frequency bands, or part of the frequency bands, or a certain frequency band.

In some possible implementations, the MSD information reported by the user equipment 101 may be applicable to a certain frequency band and/or a certain self-interference type agreed upon in the protocol.

In the disclosed embodiment, the user equipment 101 reports the MSD information supported by itself by reporting the capability information to the network device 102, so that the network device 102 can obtain MSD information adapted to the capability of the user equipment 101, so that the network device 102 can perform more reasonable scheduling based on the capability of the user equipment 101.

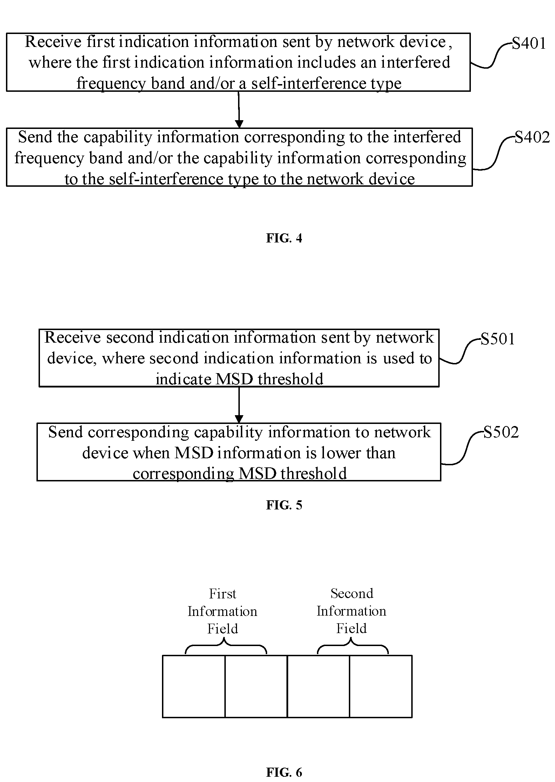

The embodiment of the present disclosure provides a method for sending capability information, which is performed by the user equipment 101. Referring to FIG. 4, FIG. 4 is a method for sending capability information according to an exemplary embodiment. As shown in FIG. 4, the method includes steps S401 to S402, specifically:
Step S401: User equipment 101 receives first indication information sent by the network device 102, where the first indication information includes an interfered frequency band and/or a self-interference type.
Step S402: User equipment 101 sends the capability information corresponding to the interfered frequency band and/or the capability information corresponding to the self-interference type to the network device 102.

The capability information is used to indicate the maximum sensitivity impairment (MSD) information supported by the user equipment 101 in multi-carrier transmission.

In some possible implementations, the network device 102 may use downlink control information (DCI), or radio resource control signaling (RRC) signaling, etc., to send the first indication information.

In some possible implementations, the types of self-interference include: harmonic interference, harmonic mixing interference, adjacent channel interference, and intermodulation interference.

In some possible implementations, in the intermodulation interference, according to the order, the intermodulation interference may further include 2nd order intermodulation interference, 3rd order intermodulation interference, 4th order intermodulation interference, etc.

In some possible implementations, in self-interference of multi-carrier transmission, the interfered frequency band may be one or more frequency bands in a frequency band combination.

In some possible implementations, the MSD information reported by the user equipment 101 according to the first indication information may correspond to all interfered frequency bands, or part of the interfered frequency bands, or include the MSD information corresponding to each interfered frequency band.

In some possible implementations, the MSD information includes an MSD value or an MSD value range.

In the disclosed embodiment, the user equipment 101 reports the corresponding MSD information according to the first indication information of the network device 102, thereby saving other signaling interaction processes with the network device 102.

The embodiment of the present disclosure provides a method for sending capability information, which is performed by the user equipment 101. Referring to FIG. 5, FIG. 5 is a method for sending capability information according to an exemplary embodiment. As shown in FIG. 5, the method includes steps S501 to S502, specifically:
Step S501: User equipment 101 receives second indication information sent by the network device 102, where the second indication information is used to indicate an MSD threshold.
Step S502: User equipment 101 sends the corresponding capability information to the network device 102 when the MSD information is lower than the corresponding MSD threshold.

In some possible implementations, the network device 102 may send the second indication information via DCI or RRC signaling.

In some possible implementations, the network device 102 may send the first indication information and the second indication information separately, or send the first indication information and the second indication information in the same signaling.

In some possible implementations, the user equipment 101 may determine the MSD information and the MSD threshold according to the MSD threshold indicated by the network device 102. When the MSD information supported by the user equipment 101 is lower than the MSD threshold, it indicates that the user equipment 101 has a strong self-interference suppression capability. This part of the UEs with strong self-interference suppression capability reports their own MSD information.

In one example, when the network device 102 indicates only the MSD threshold, the user equipment 101 judges whether the MSD information corresponding to the different self-interference types on each interfered frequency band is lower than the MSD threshold. If they are all lower than the MSD threshold, the capability information is reported, otherwise it is not necessary to report. It can be understood that the interfered frequency band of the user equipment 101 may be one or more, and the self-interference type of the user equipment 101 may be one or more.

In the disclosed embodiment, the network device 102 sends the second indication information, and the user equipment 101 can perform a screening based on its own capabilities, and the UEs that meet the threshold requirements report the MSD information, while the UEs that do not meet the threshold requirements do not need to report the MSD information. Therefore, the network device 102 can make full use of the performance of the UEs with strong self-interference suppression capabilities to perform reasonable configuration, and can save the processing process of the capability information of the UEs with poor capabilities.

The embodiment of the present disclosure provides a method for sending capability information, which is performed by the user equipment 101. The method includes steps S501 to S502, wherein:
The second indication information is also used to indicate the interfered frequency band and/or self-interference type corresponding to the MSD threshold.

The interfered frequency band and/or self-interference type corresponding to the MSD threshold, that is, to which interfered frequency band and/or self-interference type the MSD threshold is applicable.

In some possible implementations, the network device 102 may adaptively configure a corresponding MSD threshold according to the interfered frequency band of the user equipment 101 in multi-carrier transmission. The user equipment 101 determines whether to report supported MSD information according to the MSD threshold.

In an example, when the number of interfered frequency bands of the user equipment 101 is one, the network device 102 may indicate one MSD threshold corresponding to the interfered frequency band.

In this example, the user equipment 101 judges whether the MSD information of each self-interference type among all self-interference types on the interfered frequency band is lower than the MSD threshold. If so, the user equipment 101 can report the capability information including the MSD information to the network device 102; otherwise, the user equipment 101 does not need to report the capability information. The capability information may include at least one piece of MSD information.

In an example, when the user equipment 101 has multiple interfered frequency bands, the network device 102 may indicate an MSD threshold corresponding to all interfered frequency bands, or an MSD threshold corresponding to some interfered frequency bands.

In this example, the user equipment 101 judges whether the MSD information of different self-interference types on each interfered frequency band in all or part of the interfered frequency bands is lower than the MSD threshold. If so, the user equipment 101 reports the capability information including the MSD information to the network device 102; otherwise, the user equipment 101 does not need to report the capability information. The capability information may include at least one piece of MSD information.

In one example, when the user equipment 101 has multiple interfered frequency bands, the network device 102 may indicate the MSD threshold corresponding to each interfered frequency band, that is, the second indication information includes multiple MSD thresholds, and each MSD threshold is applicable to one interfered frequency band.

In this example, the user equipment 101 judges whether the MSD information of different self-interference types on each interfered frequency band is lower than the MSD threshold corresponding to the interfered frequency band. If the judgment results of all interfered frequency bands are lower than the corresponding MSD threshold, the user equipment 101 reports the corresponding capability information. The capability information may include multiple pieces of MSD information.

In some possible implementations, the network device 102 may adaptively configure a corresponding MSD threshold according to the type of self-interference in multi-carrier transmission of the user equipment 101. The user equipment 101 determines whether to report supported MSD information according to the MSD threshold.

In an example, when the self-interference type of the user equipment 101 is one, the network device 102 may indicate an MSD threshold corresponding to the self-interference type.

In this example, the user equipment 101 judges whether the MSD information of different interfered frequency bands in the self-interference type is lower than the MSD threshold. If so, the user equipment 101 can report the capability information including the MSD information to the network device 102; otherwise, the user equipment 101 does not need to report the capability information. The capability information may include at least one piece of MSD information.

In an example, when the user equipment 101 has multiple self-interference types, the network device 102 may indicate an MSD threshold corresponding to all interfered frequency bands, or an MSD threshold corresponding to some interfered frequency bands.

In this example, the user equipment 101 judges the relationship between the MSD information of each self-interference type in all or part of the self-interference types of different interfered frequency bands and the MSD threshold. If they are all lower than the MSD threshold, the user equipment 101 reports the capability information including the MSD information to the network device 102; otherwise, the user equipment 101 does not need to report the capability information. In the embodiment, the capability information may include at least one piece of MSD information.

In an example, when the user equipment 101 has multiple self-interference types, the network device 102 may indicate an MSD threshold corresponding to each self-interference type.

In this example, the user equipment 101 judges whether the MSD information of each self-interference type in different interfered frequency bands is lower than the MSD threshold corresponding to the self-interference type. If the judgement results of all self-interference types are lower than the corresponding MSD threshold, the user equipment 101 reports the corresponding capability information. The capability information may include multiple pieces of MSD information.

In some possible implementations, the network device 102 may adaptively configure the corresponding MSD threshold according to the interfered frequency band and self-interference type of the user equipment 101 in multi-carrier transmission. The user equipment 101 determines whether to report the supported MSD information according to the MSD threshold.

In one example, the interfered frequency band and self-interference type of the user equipment 101 correspond to only the same MSD information, and the user equipment 101 only determines whether the MSD information is lower than the MSD threshold. If so, the capability information including the MSD information is reported, otherwise, the capability information does not need to be reported.

In one example, user equipment 101 corresponds to different MSD information under different interfered frequency bands and self-interference types. User equipment 101 needs to judge whether the MSD information of each interfered frequency band under the supported different self- interference types is lower than the corresponding MSD threshold. If so, capability information including multiple pieces of MSD information is reported. If not, the capability information does not need to be reported.

In the disclosed embodiment, according to the second indication information of the network device 102, the user equipment 101 can make an adaptive decision based on the MSD information corresponding to the interfered frequency band and the self-interference type, and report the capability information when the threshold requirement is met.

The embodiment of the present disclosure provides a method for sending capability information, which is performed by a user equipment 101. The method includes step S301, specifically:

Step S301: User equipment 101 sends capability information to network device 102, where the capability information is used to indicate maximum sensitivity impairment (MSD) information supported by user equipment 101 in multi-carrier transmission.

The capability information includes a plurality of pieces of MSD information corresponding to different interfered frequency bands.

In some possible implementations, in self-interference of multi-carrier transmission, the interfered frequency band may be one or more frequency bands in a frequency band combination.

In some possible implementations, the same capability information may include MSD information corresponding to each interfered frequency band, or the user equipment 101 may use different capability information to report the MSD information corresponding to each interfered frequency band respectively.

In some possible implementations, the capability information includes a first information field for indicating MSD information, and a second information field for indicating an interfered frequency band.

In an example, the first information field and the second information field in the capability information may refer to that shown in FIG. 6.

As shown in FIG. 6, the first information field may occupy 1 to 2 bits, and the second information field may occupy 2 bits.

In an example, referring to Table 1, the 2-bit value in the second information field and the interfered frequency band may have the following corresponding relationship: 0, 1 and 2 represent the Band number, for example, representing the Band numbers arranged from large to small.

**Table 1**

| Bit | Interfered frequency band |
|---|---|
| 00 | 0 |
| 01 | 1 |
| 10 | 2 |

Alternatively, as shown in Table 2, the 2-bit value in the second information field and the interfered frequency band may have the following corresponding relationship.

**Table 2**

| Bit | Interfered frequency band |
|---|---|
| 00 | Band X1 |
| 01 | Band X2 |
| 10 | Band X3 |
| 11 | Band X4 |

In this example, the user equipment 101 may support 3 frequency band combinations or more than 3 frequency band combinations.

In one example, when the user equipment supports more than three frequency band combinations, it may re-report the capability information, as shown in the example of Table 4.

In another example, when the user equipment supports more than three frequency band combinations, it is not necessary to additionally report capability information, but referring to the capability information when the three frequency bands are combined.

For example, for the following first frequency band combination of user equipment 101:
Uplink: Band X1+Band X3
Downlink: Band X1+ Band X2+ Band X3, Band X1+ Band X3+ Band X4;

The user equipment 101 has reported the capability information of the first frequency band combination, and the capability information includes the interfered frequency band under this frequency band combination.

For the second frequency band combination of more than 3 as follows:
Uplink: Band X1+Band X3
Downlink: Band X1+ Band X2+ Band X3+ Band X4,

The user equipment 101 does not need to re-report the capability information, and can refer to the capability information when falling back to the first frequency band combination and the interfered frequency band.

In the disclosed embodiment, the user equipment 101 may report the MSD information corresponding to each interfered frequency band respectively, and may not report the self-interference type to save occupied bits.

The embodiment of the present disclosure provides a method for sending capability information, which is performed by a user equipment 101. The method includes step S301, specifically:
Step S301: User equipment 101 sends capability information to network device 102, where the capability information is used to indicate maximum sensitivity impairment (MSD) information supported by user equipment 101 in multi-carrier transmission.

The capability information includes multiple pieces of MSD information corresponding to different self-interference types.

In some possible implementations, the types of self-interference include: harmonic interference, harmonic mixing interference, adjacent channel interference, and intermodulation interference.

In some possible implementations, in the intermodulation interference, according to order, the intermodulation interference may further include 2nd order intermodulation interference, 3rd order intermodulation interference, 4th order intermodulation interference, etc.

In some possible implementations, the same capability information may include MSD information corresponding to each interfered frequency band, or the user equipment 101 may use different capability information to report the MSD information corresponding to each interfered frequency band respectively.

In some possible implementations, the capability information includes a first information field for indicating MSD information, and a third information field for indicating a self-interference type.

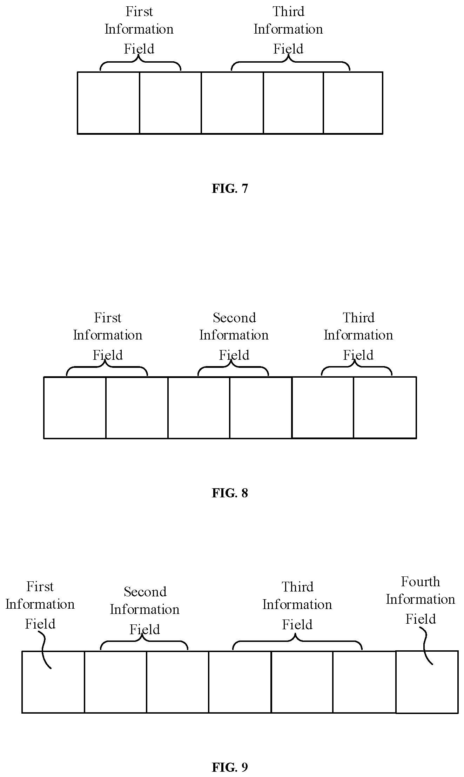

In an example, the first information field and the third information field in the capability information may refer to that shown in FIG. 7.

As shown in FIG. 7, the first information field may occupy 1 to 2 bits, and the third information field may occupy 2 to 3 bits.

In an example, referring to Table 3, the 2-bit value in the third information field and the self-interference type may have the following corresponding relationship.

**Table 3**

| Bit | Self-interference type |
|---|---|
| 00 | Harmonic interference |
| 01 | Harmonic mixing interference |
| 10 | Adjacent channel interference |
| 11 | Intermodulation Interference |

In another example, as shown in Table 4, the 3-bit value in the third information field and the self-interference type may have the following corresponding relationship: In this example, the order of intermodulation interference may be indicated.

**Table 4**

| Bit | Self-interference type |
|---|---|
| 000 | Harmonic interference |
| 001 | Harmonic mixing interference |
| 010 | Adjacent channel interference |
| 011 | 2nd-order intermodulation interference |
| 100 | 3rd-order intermodulation interference |
| 101 | 4th-order Intermodulation Interference |
| 110 | 5th-order intermodulation interference |
| 111 | 6th-order intermodulation interference |

In the disclosed embodiment, the user equipment 101 may report the MSD information corresponding to each self-interference type respectively, and may not report the self-interference type to save occupied bits.

The embodiment of the present disclosure provides a method for sending capability information, which is performed by a user equipment 101. The method includes step S301, specifically:
Step S301: User equipment 101 sends capability information to network device 102, where the capability information is used to indicate maximum sensitivity impairment (MSD) information supported by user equipment 101 in multi-carrier transmission.

The MSD information includes whether the first MSD capability is supported.

In some possible implementations, the first MSD capability is used to represent that the MSD information supported by the user equipment 101 is lower than a value agreed upon in the protocol.

In an example, when the MSD value supported by the user equipment 101 is lower than the value agreed upon by the protocol, the user equipment 101 supports the first MSD capability.

For example, assuming that the MSD value agreed upon by the protocol is 20 dB, when the MSD value supported by the user equipment 101 is lower than 20 dB, it indicates that the user equipment 101 supports the first MSD capability.

In an example, when the difference between the MSD value supported by the user equipment 101 and the value defined by the protocol is greater than or equal to a set threshold, the user equipment 101 supports the first MSD capability.

For example, assuming that the set threshold is 5 dB and the MSD value agreed upon in the protocol is 20 dB, when the MSD value supported by the user equipment 101 is 15 dB, the difference from the value agreed upon in the protocol is 5 dB, that is, the threshold is reached, and the user equipment 101 supports the first MSD capability.

In some possible implementations, referring to FIG. 6 or FIG. 7, the capability information includes a first information field for indicating MSD information.

In some possible implementations, the first information field includes 1 bit, and the 1 bit is used to indicate whether the user equipment 101 supports the low MSD capability. For example, referring to Table 5, it can be known that the relationship between the value of the 1 bit and whether the user equipment 101 supports the low MSD capability.

**Table 5**

| Bit | MSD Information |
|---|---|
| 0 | Supports the first MSD capability |
| 1 | No support for first MSD capability |

In the disclosed embodiment, the user equipment 101 may report whether it supports the low MSD capability through one bit, so that the network device 102 may perform adaptive scheduling in combination with the capability.

The embodiment of the present disclosure provides a method for sending capability information, which is performed by a user equipment 101. The method includes step S301, specifically:

Step S301: User equipment 101 sends capability information to network device 102, where the capability information is used to indicate maximum sensitivity impairment (MSD) information supported by user equipment 101 in multi-carrier transmission.

The MSD information includes at least one of the following:
The MSD value supported by the user equipment; or
The range of MSD value supported by the user equipment.

In some possible implementations, referring to FIG. 6 or FIG. 7, the capability information includes a first information field for indicating MSD information.

In some possible implementations, the first information field may include 2 bits, and the value of the 2 bits indicates the corresponding MSD value, as shown in Table 6:

**Table 6**

| Bit | MSD Information |
|---|---|
| 00 | 5 dB |
| 01 | 10 dB |
| 10 | 15 dB |
| 11 | 20 dB |

Alternatively, the 2-bit value indicates the corresponding MSD value range, as shown in Table 7:

**Table 7**

| Bit | MSD Information |
|---|---|
| 00 | 0~5 dB |
| 01 | 5~10 dB |
| 10 | 10~15 dB |
| 11 | > 15 dB |

In the disclosed embodiment, the user equipment 101 may report the MSD value or MSD value range supported by itself through 2 bits, so that the network device 102 may perform adaptive scheduling in combination with the capability.

The embodiment of the present disclosure provides a method for sending capability information, which is performed by a user equipment 101. The method includes step S301, specifically:
Step S301: User equipment 101 sends capability information to network device 102, where the capability information is used to indicate maximum sensitivity impairment (MSD) information supported by user equipment 101 in multi-carrier transmission.

The capability information is also used to indicate at least one of the following:
the interfered frequency band corresponding to the MSD information;
the self-interference type corresponding to the MSD information; or
the power class corresponding to the MSD information.

In some possible implementations, the capability information includes at least one of the following:
a second information field for indicating an interfered frequency band;
a third information field for indicating the type of self-interference; or
a fourth information field for indicating the power class.

In some possible implementations, the user equipment 101 may indicate the MSD information and the interfered frequency band through the capability information.

For example, as shown in FIG. 6, the capability information includes a first information field for indicating the MSD information and a second information field for indicating the interfered frequency band. The first information field may occupy 1 to 2 bits, as shown in Tables 5 to 7. The second information field may occupy 2 bits, as shown in Tables 1 to 2.

In some possible implementations, the user equipment 101 may indicate the MSD information and the self-interference type through the capability information.

For example, as shown in FIG. 7, the capability information includes a first information field for indicating the MSD information and a third information field for indicating the self-interference type. The first information field may occupy 1 to 2 bits, as shown in Tables 5 to 7. The third information field may occupy 2 to 3 bits, as shown in Tables 3 to 4.

In some possible implementations, the user equipment 101 may indicate the MSD information and the power class (PC) through the capability information. In this case, it indicates that the MSD information is applicable at the power class.

In some possible implementations, the capability information includes a first information field for indicating the MSD information and a fourth information field for indicating the power class, wherein the first information field may occupy 1 to 2 bits, and the fourth information field may occupy 1 to 2 bits.

In some possible implementations, the user equipment 101 indicates the MSD information, the interfered frequency band, and the self-interference type through the capability information. Referring to FIG. 8, the capability information includes a first information field, a second information field, and a third information field. The first information field may occupy 1 to 2 bits, the second information field may occupy 2 bits, and the third information field may occupy 2 to 3 bits. A total of 6 to 7 bits are occupied.

In some possible implementations, the user equipment 101 indicates the MSD information, the interfered frequency band, the self-interference type, and the power class through the capability information. Referring to FIG. 9, the capability information includes a first information field, a second information field, a third information field, and a fourth information field. The first information field may occupy 1 to 2 bits, the second information field may occupy 2 bits, the third information field may occupy 2 to 3 bits, and the fourth information field may occupy 1 to 2 bits. A total of 6 to 9 bits are occupied.

In the disclosed embodiment, the user equipment 101 may report the MSD information and other parameters applicable to the MSD information through the capability information, so that the network device 102 may more accurately know the capability of the user equipment 101, thereby performing more reasonable and accurate scheduling.

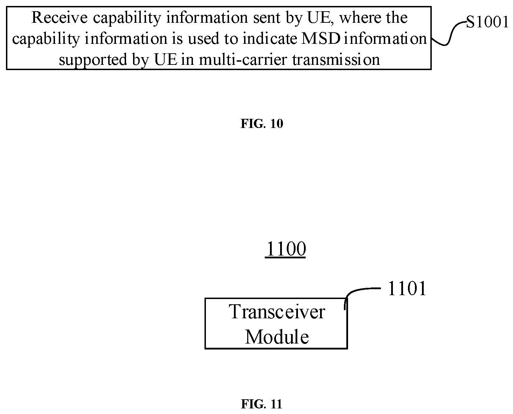

The embodiment of the present disclosure provides a method for receiving capability information, which is performed by a network device 102. Referring to FIG. 10, FIG. 10 is a method for receiving capability information according to an exemplary embodiment. As shown in FIG. 10, the method includes step S1001, specifically:
Step S1001: Network device 102 receives capability information sent by user equipment 101, where the capability information is used to indicate maximum sensitivity impairment (MSD) information supported by the user equipment 101 in multi-carrier transmission.

In some possible implementations, the multi-carrier transmission may be transmission based on a carrier aggregation technology, or transmission based on a dual link technology.

In some possible implementations, the MSD information reported by the user equipment 101 may be applicable to all interfered frequency bands, some interfered frequency bands or a certain interfered frequency band; it may also be applicable to all self-interference types, some self-interference types or a certain self-interference type.

In some possible implementations, the MSD information reported by the user equipment 101 may be applicable to a certain frequency band and/or a certain self-interference type agreed upon in the protocol.

In the disclosed embodiment, the network device 102 obtains the MSD information supported by the user equipment 101 according to the capability information reported by the user equipment 101, so that the network device 102 can perform more reasonable scheduling based on the capability of the user equipment 101.

The embodiment of the present disclosure provides a method for receiving capability information, which is performed by a network device 102. The method includes steps S1000' to S1001', specifically:
Step S1000': Network device 102 sends first indication information to user equipment 101, where the first indication information includes the interfered frequency band and/or the self-interference type.
Step S1001': Network device 102 receives capability information corresponding to the interfered frequency band and/or capability information corresponding to the self-interference type sent by the user equipment 101.

In some possible implementations, the network device 102 may send the first indication information via a DCI or RRC signaling.

In some possible implementations, the types of self-interference include: harmonic interference, harmonic mixing interference, adjacent channel interference, and intermodulation interference.

In some possible implementations, in the intermodulation interference, according to the order, the intermodulation interference may further include 2nd order intermodulation interference, 3rd order intermodulation interference, 4th order intermodulation interference, etc.

In some possible implementations, in self-interference of multi-carrier transmission, the interfered frequency band may be one or more frequency bands in a frequency band combination.

In some possible implementations, in combination with the first indication information sent by the network device 102, the user equipment 101 may only need to send the applicable MSD information corresponding to the interfered frequency band and/or self-interference type in the first indication information.

In the embodiment of the present disclosure, before obtaining the capability information of the user equipment 101, the network device 102 may first send the first indication information to the user equipment 101, and the user equipment 101 reports the capability information according to the first indication information. Thus, the network device 102 obtains the required capability information in a targeted manner, saves other signaling interactions with the user equipment 101, and can perform reasonable scheduling.

The embodiment of the present disclosure provides a method for receiving capability information, which is performed by a network device 102. The method includes steps S1000" to S1001", specifically:
Step S1000": Network device 102 sends second indication information to user equipment 101, where the second indication information is used to indicate the MSD threshold.
Step S1001": Network device 102 receives the capability information sent by the user equipment 101, and the MSD information in the capability information is lower than the MSD threshold.

In some possible implementations, the network device 102 may send the second indication information via a DCI or RRC signaling.

In some possible implementations, the network device 102 may send the first indication information and the second indication information separately, or send the first indication information and the second indication information in the same signaling.

In some possible implementations, the second indication information is further used to indicate the interfered frequency band and/or the self-interference type corresponding to the MSD threshold.

In this implementation manner, the self-interference types include: harmonic interference, harmonic mixing interference, adjacent channel interference and intermodulation interference.

In this implementation manner, in the intermodulation interference, according to the order, the intermodulation interference may further include 2nd order intermodulation interference, 3rd order intermodulation interference, 4th order intermodulation interference, etc.

In this implementation manner, in the self-interference of multi-carrier transmission, the interfered frequency band may be one or more frequency bands in a frequency band combination.

In this implementation, the user equipment 101 may make adaptive decisions and report capability information in combination with different contents of the second indication information.

In the embodiment of the present disclosure, before obtaining the capability information of the user equipment 101, the network device 102 may first send the second indication information to the user equipment 101, so that the user equipment 101 may make a judgment based on the second indication information, and then report the capability information when the threshold condition is met. The capability information received by the network device 102 corresponds to UEs with strong self-interference suppression capabilities, so that these UEs can be reasonably configured, saving the processing process of the capability information of UEs with poor capabilities.

The embodiment of the present disclosure provides a method for receiving capability information, which is performed by a network device 102. The method includes steps S1001 to S1002, specifically:
Step S1001: Network device 102 receives capability information sent by user equipment 101, where the capability information is used to indicate maximum sensitivity impairment (MSD) information supported by the user equipment 101 in multi-carrier transmission.
Step S1001: Network device 102 performs scheduling according to capability information.

In some possible implementations, the MSD information includes an MSD value or an MSD value range.

In some possible implementations, the MSD information supported by the user equipment 101 includes whether the first MSD capability is supported. The first MSD capability is used to indicate that the MSD information supported by the user equipment 101 is lower than a value agreed upon in the protocol.

In some possible implementations, the MSD information supported by the user equipment 101 includes an MSD value or an MSD value range.

In some possible implementations, the smaller the MSD value supported by the user equipment 101, the stronger the self-interference suppression capability is.

In some possible implementations, the network device 102 may configure a multi-carrier mode for the user equipment 101 with strong self-interference suppression capability, which can not only improve the transmission rate and system capacity, but also effectively reduce the impact of the self-interference problem and reduce sensitivity loss.

In some possible implementations, for the user equipment 101 configured in multi-carrier mode and having a strong self-interference suppression capability, a larger uplink transmission power may still be allowed to improve system performance.

In the disclosed embodiment, the network device 102 performs reasonable scheduling based on the capability information of the user equipment 101, so as to reduce the impact of the self-interference problem in multi-carrier transmission, and can make full use of the user equipment 101 with strong capabilities to improve system performance.

Based on the same concept as the above method embodiment, the embodiment of the present disclosure also provides an apparatus for sending capability information, which can have the functions of the user equipment 101 in the above method embodiment, and can be used to execute the steps performed by the user equipment 101 provided in the above method embodiment. The function can be implemented by hardware, or by software or hardware executing corresponding software. The hardware or software includes one or more modules corresponding to the above functions.

In a possible implementation, the communication device 1100 shown in FIG. 11 may be used as the user equipment 101 involved in the above method embodiment, and execute the steps performed by the user equipment 101 in the above method embodiment. As shown in FIG. 11, the communication device 1100 may include a transceiver module 1101, wherein the transceiver module 1101 may be used to support the communication device to communicate, and the transceiver module 1101 may have a wireless communication function, for example, being able to wirelessly communicate with other communication devices through a wireless air interface.

When performing the steps implemented by the user equipment 101, the transceiver module 1101 is configured to send capability information to the network device, where the capability information is used to indicate maximum sensitivity impairment (MSD) information supported by the user equipment 101 in multi-carrier transmission.

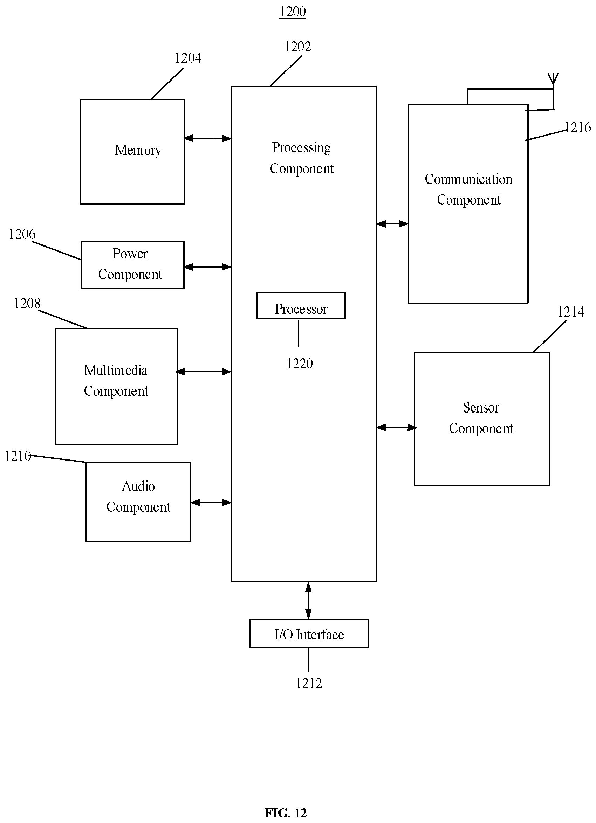

When the communication device is a user equipment 101, its structure may also be as shown in FIG. 12. Referring to FIG. 12, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 generally controls the overall operations of the device 1200, such as operations associated with display, telephone calls, data communications, camera operations, and recording operations. The processing component 1202 may include one or more processors 1220 to execute instructions to complete all or part of the steps of the above method. Additionally, processing component 1202 may include one or more modules that facilitate interaction between processing component 1202 and other components. For example, processing component 1202 may include a multimedia module to facilitate interaction between multimedia component 1208 and processing component 1202.

The memory 1204 is configured to store various types of data to support operations at the device 1200. Examples of such data include instructions for any application or method operating on the device 1200, contact data, phonebook data, messages, pictures, videos, etc. The memory 1204 can be realized by any type of volatile or non-volatile storage device or their combination, such as static random access memory (SRAM), electrically erasable programmable read only memory (EEPROM), erasable programmable read only memory (EPROM), programmable read only memory (PROM), read only memory (ROM), magnetic memory, flash memory, magnetic disk or optical disk.

The power component 1206 provides power to various components of the device 1200. The power component 1206 may include a power management system, one or more power supplies, and other components associated with generating, managing, and distributing power for device 1200.

The multimedia component 1208 includes a screen providing an output interface between the device 1200 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or a swipe action, but also detect duration and pressure associated with the touch or swipe operation. In some embodiments, the multimedia component 1208 includes a front camera and/or a rear camera. When the device 1200 is in an operation mode, such as a photographing mode or a video mode, the front camera and/or the rear camera can receive external multimedia data. Each front camera and rear camera can be a fixed optical lens system or have focal length and optical zoom capability.

The audio component 1210 is configured to output and/or input audio signals. For example, the audio component 1210 includes a microphone (MIC), which is configured to receive an external audio signal when the device 1200 is in an operation mode, such as a call mode, a recording mode and a voice recognition mode. Received audio signals may be further stored in memory 1204 or sent via communication component 1216. In some embodiments, the audio component 1210 also includes a speaker for outputting audio signals.

The I/O interface 1212 provides an interface between the processing component 1202 and a peripheral interface module, which may be a keyboard, a click wheel, a button, and the like. These buttons may include, but are not limited to: a home button, volume buttons, start button, and lock button.

The sensor component 1214 includes one or more sensors for providing device 1200 with various aspects of status assessment. For example, the sensor component 1214 can detect the open/closed state of the device 1200, the relative positioning of components, such as the display and the keypad of the device 1200, the sensor component 1214 can also detect the device 1200 or a change in the position of a component of the device 1200, the presence or absence of user's contact with the device 1200, the change of orientation or acceleration/deceleration of the device 1200 and the temperature change of the device 1200. The sensor component 1214 may include a proximity sensor configured to detect the presence of nearby objects in the absence of any physical contact. The sensor component 1214 may also include an optical sensor, such as a CMOS or CCD image sensor, for use in imaging applications. In some embodiments, the sensor component 1214 may also include an acceleration sensor, a gyroscope sensor, a magnetic sensor, a pressure sensor or a temperature sensor.

The communication component 1216 is configured to facilitate wired or wireless communication between the device 1200 and other devices. The device 1200 can access a wireless network based on communication standards, such as WiFi, 2G or 3G, or a combination thereof. In an exemplary embodiment, the communication component 1216 receives broadcast signals or broadcast related information from an external broadcast management system via a broadcast channel. In an exemplary embodiment, the communication component 1216 also includes a near field communication (NFC) module to facilitate short-range communication. For example, the NFC module can be implemented based on radio frequency identification (RFID) technology, infrared data association (IrDA) technology, ultra wideband (UWB) technology, bluetooth (BT) technology and other technologies.

In an exemplary embodiment, device 1200 may be implemented by one or more application specific integrated circuits (ASIC), digital signal processors (DSP), digital signal processing devices (DSPD), programmable logic devices (PLD), field programmable gate array (FPGA), controllers, microcontrollers, microprocessors or other electronic components for performing the method described above.

In an exemplary embodiment, there is also provided a non-transitory computer-readable storage medium including instructions, such as the memory 1204 including instructions, which can be executed by the processor 1220 of the device 1200 to implement the above method. For example, the non-transitory computer readable storage medium may be ROM, random access memory (RAM), CD-ROM, magnetic tape, floppy disk, and optical data storage device, and the like.

Based on the same concept as the above method embodiment, the embodiment of the present disclosure also provides an apparatus for receiving capability information, which can have the function of the network device 102 in the above method embodiment, and can be used to execute the steps performed by the network device 102 provided in the above method embodiment. The function can be implemented by hardware, or by software or hardware executing corresponding software. The hardware or software includes one or more modules corresponding to the above functions.

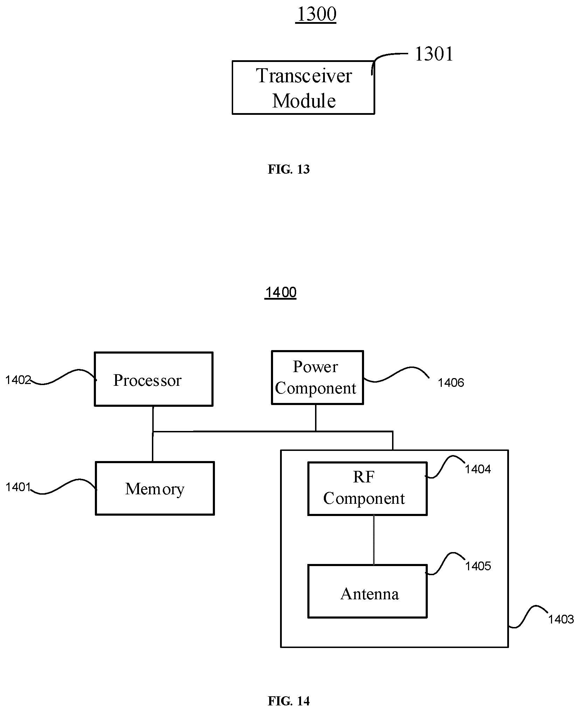

In a possible implementation, the device 1300 shown in FIG. 13 may be used as the network device 102 involved in the above method embodiment, and execute the steps performed by the network device 102 in the above method embodiment. As shown in FIG. 13, the device 1300 may include a transceiver module 1301, wherein the transceiver module 1301 may be used to support the communication device to communicate, and the transceiver module 1301 may have a wireless communication function, for example, being able to wirelessly communicate with other communication devices through a wireless air interface.

When performing the steps implemented by the network device 102, the transceiver module 1301 is configured to receive capability information sent by the user equipment 101, where the capability information is used to indicate maximum sensitivity impairment (MSD) information supported by the user equipment 101 in multi-carrier transmission.

When the communication device is a network device 102, its structure can also be shown in FIG. 14. Take the base station as an example to illustrate the structure of the communication device. As shown in FIG. 14, the device 1400 includes a memory 1401, a processor 1402, a transceiver component 1403, and a power component 1406. In the embodiment, the memory 1401 is coupled to the processor 1402, and can be used to store the programs and data necessary for the communication device 1400 to implement various functions. The processor 1402 is configured to support the communication device 1400 to perform the corresponding functions in the above method, and the functions can be implemented by calling the program stored in the memory 1401. The transceiver component 1403 can be a wireless transceiver, which can be used to support the communication device 1400 to receive signaling and/or data through a wireless air interface, and send signaling and/or data. The transceiver component 1403 may also be referred to as a transceiver unit or a communication unit. The transceiver component 1403 may include a radio frequency component 1404 and one or more antennas 1405, wherein the radio frequency component 1404 may be a remote radio unit (RRU), which in particular may be used for transmission of radio frequency signals and conversion of radio frequency signals and baseband signals, and the one or more antennas 1405 may be specifically used for radiation and reception of radio frequency signals.

When the communication device 1400 needs to send data, the processor 1402 can perform baseband processing on the data to be sent, and then output the baseband signal to the radio frequency unit. The radio frequency unit performs radio frequency processing on the baseband signal and then sends the radio frequency signal in the form of electromagnetic waves through the antenna. When data is sent to the communication device 1400, the radio frequency unit receives the radio frequency signal through the antenna, converts the radio frequency signal into a baseband signal, and outputs the baseband signal to the processor 1402. The processor 1402 converts the baseband signal into data and processes the data.

Those skilled in the art will readily appreciate other implementations of the disclosed embodiments after considering the specification and practicing the invention disclosed herein. The present disclosure is intended to cover any variations, uses, or adaptations of the disclosed embodiments, which follow the general principles of the disclosed embodiments and include common knowledge or customary technical means in the art that are not disclosed in the present disclosure. The specification and examples are to be considered merely exemplary, and the true scope and spirit of the disclosed embodiments are indicated by the following claims.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

### Industrial Applicability

In the disclosed method, the user equipment reports capability information to the network device and reports the MSD information it supports, so that the network device can obtain the MSD information adapted to the capabilities of the user equipment, so that the network device can perform more reasonable scheduling based on the capabilities of the user equipment.

## Claims

1. A method for sending capability information, performed by a user equipment, the method comprising:
sending capability information to a network device, wherein the capability information is used to indicate maximum sensitivity impairment (MSD) information supported by the user equipment in multi-carrier transmission.

2. The method according to claim 1, wherein the sending capability information to the network device comprises:
receiving first indication information sent by the network device, wherein the first indication information comprises an interfered frequency band and/or a self-interference type; and
sending the capability information corresponding to the interfered frequency band and/or the capability information corresponding to the self-interference type to the network device.

3. The method according to claim 1, wherein the sending capability information to the network device comprises:
receiving second indication information sent by the network device, wherein the second indication information is used to indicate an MSD threshold; and
sending the corresponding capability information to the network device when the MSD information is lower than the corresponding MSD threshold.

4. The method according to claim 3, wherein the second indication information is further used to indicate the interfered frequency band and/or the self-interference type corresponding to the MSD threshold.

5. The method according to claim 1, wherein the capability information comprises a plurality of pieces of MSD information corresponding to different interfered frequency bands.

6. The method according to claim 1, wherein the capability information comprises a plurality of pieces of MSD information corresponding to different self-interference types.

7. The method according to any one of claims 1 to 6, wherein the MSD information comprises whether a first MSD capability is supported.

8. The method according to any one of claims 1 to 6, wherein the MSD information comprises at least one of:
an MSD value supported by the user equipment; or
an MSD value range supported by the user equipment.

9. The method according to any one of claims 1 to 6, wherein the capability information comprises a first information field for indicating the MSD information.

10. The method according to any one of claims 1 to 6, wherein the capability information is further used to indicate at least one of:
an interfered frequency band corresponding to the MSD information;
a self-interference type corresponding to the MSD information; or
a power class corresponding to the MSD information.

11. The method according to claim 10, wherein the capability information includes at least one of:
a second information field for indicating the interfered frequency band;
a third information field for indicating the self-interference type; or
a fourth information field for indicating the power class.

12. A method for receiving capability information, performed by a network device, the method comprising:
receiving capability information sent by a user equipment, wherein the capability information is used to indicate maximum sensitivity impairment (MSD) information supported by the user equipment in multi-carrier transmission.

13. The method according to claim 12, wherein the receiving capability information sent by the user equipment comprises:
sending first indication information to the user equipment, wherein the first indication information comprises an interfered frequency band and/or a self-interference type; and
receiving the capability information corresponding to the interfered frequency band and/or the capability information corresponding to the self-interference type sent by the user equipment.

14. The method according to claim 12, wherein the receiving capability information sent by the user equipment comprises:
sending second indication information to the user equipment, wherein the second indication information is used to indicate an MSD threshold; and
receiving the capability information sent by the user equipment, wherein the MSD information in the capability information is lower than the MSD threshold.

15. The method according to claim 14, wherein the second indication information is further used to indicate the interfered frequency band and/or the self-interference type corresponding to the MSD threshold.

16. The method according to any one of claims 12 to 15, wherein the method further comprises:
performing scheduling according to the capability information.

17. An apparatus for sending capability information, configured in a user equipment, the apparatus comprising:
a transceiver module, configured to send capability information to a network device, wherein the capability information is used to indicate maximum sensitivity impairment (MSD) information supported by the user equipment in multi-carrier transmission.

18. An apparatus for receiving capability information, configured in a network device, the apparatus comprising:
a transceiver module, configured to receive capability information sent by a user equipment, wherein the capability information is used to indicate maximum sensitivity impairment (MSD) information supported by the user equipment in multi-carrier transmission.

19. A communication device, comprising a processor and a memory, wherein:
the memory is configured to store a computer program; and
the processor is configured to execute the computer program, to implement the method according to any one of claims 1 to 11.

20. A communication device, comprising a processor and a memory, wherein:
the memory is configured to store a computer program; and
the processor is configured to execute the computer program, to implement the method according to any one of claims 12 to 16.

21. A computer-readable storage medium, wherein instructions are stored in the computer-readable storage medium, and when the instructions are called and executed on a computer, the computer is caused to execute the method according to any one of claims 1 to 11.

22. A computer-readable storage medium, wherein instructions are stored in the computer-readable storage medium, and when the instructions are called and executed on a computer, the computer is caused to execute the method according to any one of claims 12 to 16.
